(19) Europäisches Patentamt
European Patent Office
Office européen des brevets

(11) **EP 2 749 900 B1**

(12) **EUROPEAN PATENT SPECIFICATION**

(45) Date of publication and mention
of the grant of the patent:
**24.05.2023   Bulletin 2023/21**

(21) Application number: **12199772.0**

(22) Date of filing: **28.12.2012**

(51) International Patent Classification (IPC):
**G01S 19/44** $^{(2010.01)}$     **G01S 19/55** $^{(2010.01)}$

(52) Cooperative Patent Classification (CPC):
**G01S 19/44; G01S 19/55**

(54) **Method for determining a baseline between two receivers**

Verfahren zur Bestimmung einer Basislinie zwischen zwei Empfängern

Procédé pour déterminer une ligne de base entre deux récepteurs

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.07.2014   Bulletin 2014/27**

(73) Proprietor: **ANavS GmbH**
**80686 München (DE)**

(72) Inventors:
• **Henkel, Patrick**
**82275 Emmering (DE)**
• **Cárdenas, Juan M.**
**80801 München (DE)**

(56) References cited:
**US-A- 5 543 804**

• **CESARE CARDANI ET AL: "Integer Ambiguity Resolution for GPS Attitude Determination From Double Difference Phase Measurements", PROCEEDINGS OF THE 2007 NATIONAL TECHNICAL MEETING OF THE INSTITUTE OF NAVIGATION, 24 January 2007 (2007-01-24), pages 172-178, XP055062251,**
• **JURKOWSKI P ET AL: "GPS Based Attitude Determination with Statistical and Deterministic Baseline A Priori Information", ITM 2012 - PROCEEDINGS OF THE 2012 INTERNATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 1 February 2012 (2012-02-01), pages 1164-1213, XP056000918,**

**Description**

The invention relates to a method for determining a baseline between two receivers of a satellite navigation system, in which:

- the receivers perform measurements on signals emitted by satellites of the satellite navigation system, and
- an evaluation unit connected to the receivers determines a baseline between the two receivers based on double-differences of the measurement.

The invention further refers to a computer program product and to a navigation device arranged for performing the method.

The term "heading" refers to a compass information, i.e. it describes the horizontal attitude of a stationary or moving object. The heading is typically expressed by an angle between the north direction and the length axis if a moving object, and oriented clockwise. Similarly, the "pitch" angle is defined as the angle between the length axis and its projection onto the earth surface.

Low cost GPS navigation chips are widely used for navigation in cars and smartphones.

Today, these chips are only used for absolute positioning although attitude information could also be very helpful. For example, car drivers starting their engine at a parking lot would often like to know whether to turn left or right into a street.

Attitude determination requires in general at least two antennas and GPS receivers. For heading accuracies of less than 1°, the carrier phase integer ambiguities have to be resolved to fully benefit from the high accuracy of carrier phase measurements. The integer ambiguity resolution requires that the differential receiver clock offset is in the order of nanoseconds.

However, low cost GNSS receivers use very cheap oscillators, which suffer from clock offsets in the order of milliseconds.

Today, the *Least-squares Ambiguity Decorrelation Adjustment* (LAMBDA) method [1]-[2] is widely used in geodetic receivers for double difference carrier phase integer ambiguity resolution. The LAMBDA method includes an integer decorrelation and a subsequent search to find the integer ambiguities which minimize the squared residuals. Once the carrier phase integer ambiguities are resolved, the baseline between two receivers can be determined with a millimeter to centimeter-level accuracy. The attitude is often described by the heading and pitch angles, which can be easily obtained from the baseline vector.

For low cost GNSS receiver boards, the traditional modeling of double difference carrier phase measurements is no longer valid as the receiver clock offsets are too large to cancel out the satellite positions. Therefore, a method was developed in [3], which calibrates the double difference carrier phases based on the movement of the receivers and the a priori known baseline length. This means that an initial heading is derived from the movement and then coasted by tracking the change of the carrier phase over time.

The LAMBDA method cannot be directly applied to low cost GNSS receivers as the conventional modeling of double difference code and carrier phase measurements is no longer valid: The clock offsets are in the order of milliseconds which are too large to be negligible, i.e. the satellites move several meters within the differential clock offset between both receivers.

The phase calibration of [3] has also a severe drawback as it requires a receiver movement, i.e. it cannot be applied to stationary receivers. Moreover, the method of [3] requires that the movement direction and the heading are aligned during the phase calibration. This is fulfilled for automotive applications but certainly not fulfilled for vessels due to currents. The method of [4] includes a tight coupling of Global Navigation Satellite System (GNSS) and inertial measurements with a Kalman filter. The strength of the sensor fusion is to enable an accurate positioning also in environments with limited or no GNSS signal reception.

Proceeding from this related art, the present invention seeks to provide an improved method for determining the relative position of two receivers.

This object is achieved by a method having the features of the independent claim.

Advantageous embodiments and refinements are specified in claims dependent thereon. In the method for determining a baseline between two receivers of a satellite navigation system, the receivers perform measurements on signals emitted by satellites of the satellite navigation system. The baseline is then determined by an evaluation unit connected to the receivers. The evaluation unit first estimates the individual clock offsets of the receivers. A clock offset difference is calculated from the individual clock offsets. The clock offset difference is used for calculating a satellite motion correction for the motion of the satellites during the clock offset difference. For determining the position and orientation of the baseline, the evaluation unit uses double-differences of the measurements, wherein the satellite motion correction is used for correcting the double-differences of the measurement resulting in corrected double differences of the measurements. The baseline is finally determined based on the corrected double differences of the measurements.

Using this method allows to determine the baseline between two receivers with high precision even if low cost receivers are used that are provided with imprecise receiver clocks. The method is therefore an efficient method for a synchronization correction, which enables an integer ambiguity resolution even for low cost GNSS receivers.

The clock offset difference can simply be calculated by subtracting the clock offsets of both receivers from each other.

The receivers further generally perform code and phase measurements, since the use of phase measurements on the carriers of the satellite navigation signals allows enhancing the precision in determining the position and orientation of the baseline.

For determining the position and orientation of the baseline with high precision, the baseline is particularly determined by resolving the double differences measurements for the baseline and for phase ambiguities of the phase measurements.

The position and the orientation of the baseline and the phase ambiguities can be determined by an iterative resolution method with sequential ambiguity fixing and/or a recursive state estimator having the ambiguities, the baseline and the change rate of the baseline as state variables, and/or a length constraint for the baseline.

The individual clock offsets of the receivers can be estimated individually for each receiver by estimating the clock offset of a given receiver together with the absolute position of the given receiver based on undifferenced code measurements of the given receiver.

For taking into account the motion of the satellites during the a time period having the duration of the clock offset difference, the satellite motion correction is determined by calculating the temporal variation of the difference of the measurements on signals from two selected satellites to a selected receiver, as seen from the selected receiver within a time period having the duration of the clock offset difference.

Since the receivers hardly move over a time period having the duration of the clock offset difference, the satellite motion correction is determined by considering the selected receiver as stationary over the duration of the clock offset difference and by calculating the temporal variation of the difference of the length of vectors respectively pointing from the two selected satellites to the selected receiver.

The vectors pointing from the two selected satellites to the selected receivers can be determined by an interpolation of the coordinates of the vectors determined in subsequent and preceding epochs.

The interpolation is particularly performed by fitting a second order polynom to the series of coordinates of the vectors of the preceding and subsequent epochs and by calculating the coordinates of the vector at the required instants of time.

The temporal variation of unity vectors, which point from the two selected satellites to the selected receiver and which are used for determining the temporal variation of the difference of the length of vectors respectively pointing from the two selected satellites to the selected receiver, can be determined by an interpolation of the coordinates of the unity vectors determined in subsequent and preceding epochs.

Corresponding to the determination of the vectors pointing from the two selected satellites to the selected receiver, the interpolation for determining the unity vectors is performed by fitting a second order polynom to the series of coordinates of the unity vectors of the preceding and subsequent epochs and by calculating the coordinates of the unity vector at the required instants of time.

In one embodiment of the method, the receivers are attached to a movable object, and the baseline is used for determining the heading of the movable object, wherein the heading can also be determined if the movable object is at rest.

Further advantages and properties of the present invention are disclosed in the following description, in which exemplary embodiments of the present invention are explained in detail based on the drawings:

Figure 1    illustrates a global navigation satellite system, which is used for determining the heading of a moving object;

Figure 2    is a flow diagram of the method;

Figure 3    is a diagram depicting the clock offset for two low-cost receivers and the differential clock offset;

Figure 4    shows diagrams containing raw double differences measurements of twelve satellites before synchronization correction;

Figure 5    is a diagram depicting the correction terms;

Figure 6    shows diagrams depicting the double differences measurements of twelve satellites after synchronization correction

## 1. Overview

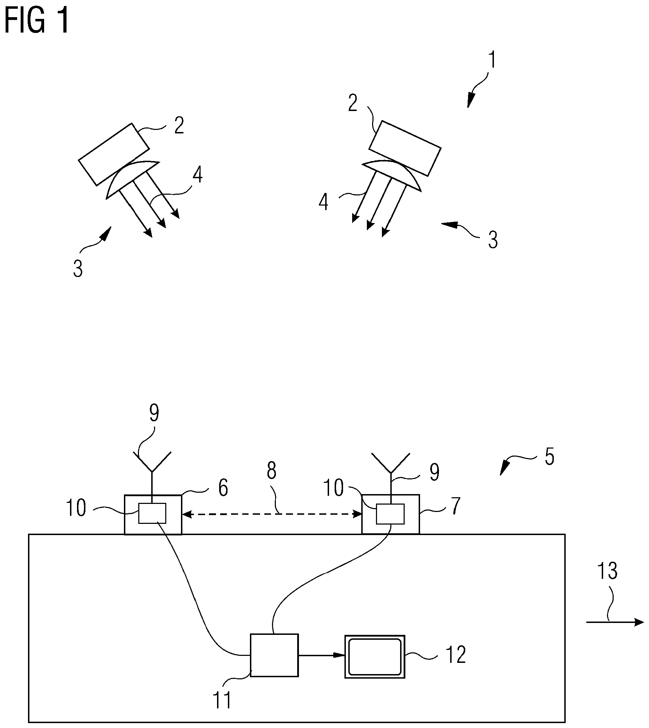

Figure 1 shows a Global Navigation Satellite System ( = GNSS) 1, which comprises satellites 2, which are orbiting around the earth and emit satellite signals 3, which are modulated on a number of carrier signals 4.

For determining the heading of a moving object 5, a first receiver 6 and a second receiver 7 are attached to the object 5. The object 5 may be an airborne vehicle, such as an airplane or a vehicle moving on the surface of the earth such as a road vehicle or a ship. It should be noted that the object 5 may also be a freight suspended from a crane or helicopter, wherein one of the receivers is attached to the freight and the other receiver is attached to the crane or helicopter.

The receivers 6 and 7 define a baseline 8, which extends between both receivers 6 and 7, in particular between antennas 9 of the receivers 6 and 7. It should be noted, that the vehicle 5 may also be provided with more than two receivers 6 and 7. Then each pair of receivers extends a separate baseline. Having more than one baseline 8 can be necessary, if the complete orientation of the object 5 must be determined in space.

Navigation signals received by the receivers 6 and 7 are processed in signal processors 10. In particular, well known code measurements and carrier phase measurements are performed. The code and carrier phase measurement are provided to an evaluation unit 11, which uses the code and phase measurements for determining the heading of the vehicle 5, which moves in a moving direction 13. The results can be shown on a display 12 or be used otherwise for controlling the motion of the vehicle 5.

In the embodiment shown in Figure 1, the baseline 8 is attached to the object 5 such, that the baseline 8 aligns with the moving direction 13, in which the object 5 is moving. Thus the attitude of the baseline 8 projected on the earth surface equals the heading of the object 5. In other embodiments the baseline may be permanently or accidentally aligned at an angle with respect the moving direction 13. For instance, if the object is a ship or an airplane, the moving direction need not necessarily coincide with the attitude of the baseline 8.

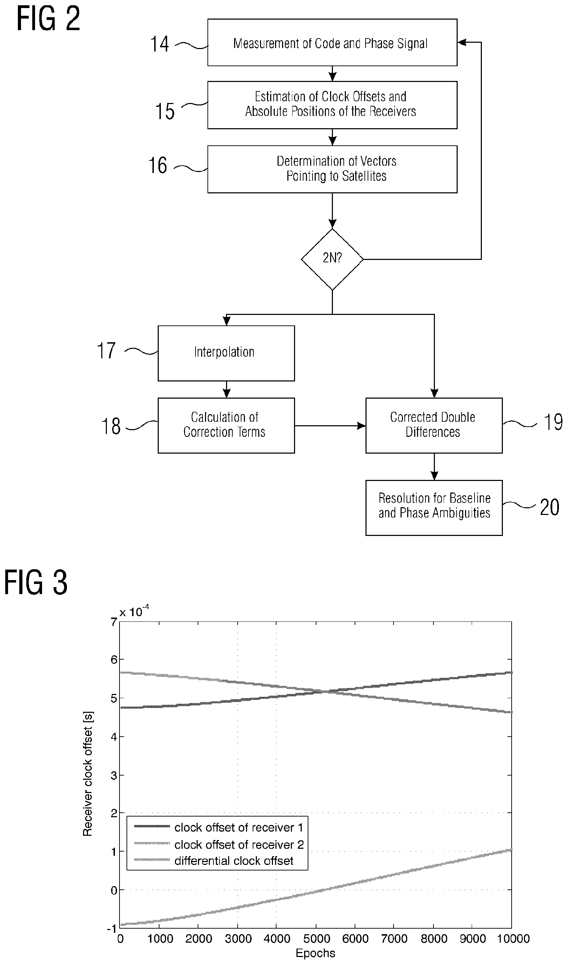

The determination of the baseline 8 according to the method decribed herein is performed in several steps as shown in Figure 2. The method starts with measurements 14 of code and phase signals. The measurement 14 is followed by an estimation 15 of the clock offset of the receiver 6 and of the clock offset of the receiver 7. The clock offsets of the receivers 6 and 7 are determined together with the absolute position of the receivers 6 and 7 respectively. In a next step, receiver-satellite vectors and untiy vectors pointing from the position of the satellites 2 to the absolute position of the receivers 6 and 7 are determined. The method steps performed so far are repeated until 2N+1 measurements 15 have been performed. The time instants of measurements are called epochs. In each epoch the measurements are processed, finally resulting in a corresponding number of clock errors, absolute positions and vectors. Then, a clock offset difference of the clock offsets of the receivers 6 and 7 is calculated for a central epoch. Based on the absolute positions and vectors obtained in N preceding and in N subsequent epochs, an interpolation 17 is performed for obtaining interpolated vectors at an instant of time which is the clock offset difference apart form the actual instant of time, at which the measurements of the central epoch are performed. Based on the interpolated vectors a correction term is determined for each pair of satellites in a calculation 18. The corrections terms for each pair of satellite is then used for performing a differentiation step 19, in which corrected double differences of the code and phase measurements are formed. Based on the corrected double differences of the code and phase measurements the baseline and the phase ambiguities are determined in a resolution step 20.

In the following the method is described in more detail.

## 2. Detailed Description of the Technical Solution

Low cost GNSS receivers suffer from clock offsets in the order of milliseconds such that a careful modeling of the double difference carrier phase measurements is required. The pseudo-double difference carrier phase for a pair of two satellites indexed by $k$ and $l$ can be modeled as

$$\frac{\lambda}{2\pi}\varphi_{12}^{kl}(t) = \frac{\lambda}{2\pi}\left(\varphi_1^k(t+\delta\tau_1)-\varphi_1^l(t+\delta\tau_1)\right)-\frac{\lambda}{2\pi}\left(\varphi_2^k(t+\delta\tau_2)-\varphi_2^l(t+\delta\tau_2)\right)$$

$$= \left(\left\|\vec{x}_1-\vec{x}^k\right\|_{t+\delta\tau_1}-\left\|\vec{x}_1-\vec{x}^l\right\|_{t+\delta\tau_1}\right)-\left(\left\|\vec{x}_2-\vec{x}^k\right\|_{t+\delta\tau_2}-\left\|\vec{x}_2-\vec{x}^l\right\|_{t+\delta\tau_2}\right)+\lambda N_{12}^{kl}+\varepsilon_{12}^{kl}(t)$$

$$= \left(\vec{e}_1^k(t+\delta\tau_1)\cdot[\vec{x}_1(t+\delta\tau_1)-\vec{x}^k(t+\delta\tau_1)]\right.$$

$$\left.-\vec{e}_1^l(t+\delta\tau_1)\cdot[\vec{x}_1(t+\delta\tau_1)-\vec{x}^l(t+\delta\tau_1)]\right)- \tag{1}$$

$$\left(\vec{e}_2^k(t+\delta\tau_2)\cdot[\vec{x}_2(t+\delta\tau_2)-\vec{x}^k(t+\delta\tau_2)]\right.$$

$$\left.-\vec{e}_2^l(t+\delta\tau_2)\cdot[\vec{x}_2(t+\delta\tau_2)-\vec{x}^l(t+\delta\tau_2)]\right)+\lambda N_{12}^{kl}+\varepsilon_{12}^{kl}(t),$$

where $\vec{e}_r^k(t_i)$ is the unit vector pointing from the $k$-th satellite to the $r$-th receiver, $\vec{x}_r(t_i)$ is the position of the $r$-th receiver, $\vec{x}^k(t_i)$ is the position of the $k$-th satellite, $\delta\tau_r$ is the clock offset of the $r$-th receiver, $N_{12}^{kl}$ is the double difference integer ambiguity and $\varepsilon_{12}^{kl}(t)$ denotes the double difference phase noise.

As can be recognized from Figure 3, for low cost receivers, the clock offsets with respect to the GPS system time are in the order of magnitude of one millisecond. The diagram of Figure 3 shows receiver clock offsets for two low-cost single-frequency LEA-6T GPS receivers of u-blox.

The absolute receiver clock offset of a first receiver 6 is determined jointly with its absolute position using undifferenced pseudorange measurements of $K$ satellites, which are modeled as

$$\begin{bmatrix}\rho_1^1(t_1)\\\vdots\\\rho_1^K(t_1)\end{bmatrix}=\begin{bmatrix}\vec{e}_1^1(t_1)(\vec{x}_1(t_1)-\vec{x}^1(t_1))+c(\delta\tau_1(t_1)-\delta\tau^1(t_1))+\eta_1^1(t_1)\\\vdots\\\vec{e}_1^K(t_1)(\vec{x}_1(t_1)-\vec{x}^K(t_1))+c(\delta\tau_1(t_1)-\delta\tau^K(t_1))+\eta_1^K(t_1)\end{bmatrix} \tag{2}$$

with $\delta\tau^k(t_1)$ being the $k$-th satellite clock offset. The absolute position and the clock offset of the first receiver are obtained by a least-squares estimation, i.e.

$$\min_{\vec{x}(t_1),c\delta\tau_1(t_1)}\left\|\begin{bmatrix}\rho_1^1(t_1)+\vec{e}_1^1(t_1)\vec{x}^1(t_1)+c\delta\tau^1(t_1)\\\vdots\\\rho_1^K(t_1)+\vec{e}_1^K(t_1)\vec{x}^1(t_1)+c\delta\tau^K(t_1)\end{bmatrix}-\begin{bmatrix}\vec{e}_1^1(t_1) & 1\\\vdots & \vdots\\\vec{e}_1^K(t_1) & 1\end{bmatrix}\begin{bmatrix}\vec{x}_1(t_1)\\c\delta\tau_1(t_1)\end{bmatrix}\right\|^2 \tag{3}$$

The clock offset of the second receiver 7 is obtained correspondingly by replacing the pseudorange measurements of the first receiver 6 by the pseudorange measurements of the second receiver 7. The difference between the two receiver clock offsets is denoted by

$$\delta\tau_{12}(t)=\delta\tau_1(t_1)-\delta\tau_2(t_2)\ , \tag{4}$$

Figure 3 demonstrates that the differential clock offset lies in the same order of magnitudes as the undifferenced clock offset.

The satellites move within the differential clock offset $\delta\tau_{12}(t)$ a few meters such that a correction is required. On the other hand, the movement of the receiver 6 and 7 within the differential clock offset $\delta\tau_{12}(t)$ can be neglected for velocities up to 100 km/h. Consequently, a correction for the motion of the satellites during the differential clock offset $\delta\tau_{12}(t)$ can be derived solely from the measurements of the first receiver 6 or alternatively from the second receiver 7 as

$$c_{12}^{kl}(t) = \left( \left\| \vec{\bar{x}}_1 - \vec{x}^k \right\|_{t+\delta\tau_1} - \left\| \vec{\bar{x}}_1 - \vec{x}^l \right\|_{t+\delta\tau_1} \right) - \left( \left\| \vec{\bar{x}}_1 - \vec{x}^k \right\|_{t+\delta\tau_2} - \left\| \vec{\bar{x}}_1 - \vec{x}^l \right\|_{t+\delta\tau_2} \right)$$

$$= \left( \vec{e}^k(t_1) \cdot [\vec{\bar{x}}_1(t_1) - \vec{x}^k(t_1)] - \vec{e}^l(t_1) \cdot [\vec{\bar{x}}_1(t_1) - \vec{x}^l(t_1)] \right)$$

$$- \left( \vec{e}^k(t_2) \cdot [\vec{\bar{x}}_1(t_2) - \vec{x}^k(t_2)] - \vec{e}^l(t_2) \cdot [(\vec{\bar{x}}_1(t_2) - \vec{x}^l(t_2)] \right) \tag{5}$$

$$\approx \left( \vec{e}^k(t_1) \cdot [\vec{\bar{x}}_1(t_1) - \vec{x}^k(t_1)] - \vec{e}^l(t_1) \cdot [\vec{\bar{x}}_1(t_1) - \vec{x}^l(t_1)] \right)$$

$$- \left( \vec{e}^k(t_1 - \delta\tau_{12}) \cdot [\vec{\bar{x}}_1(t_1) - \vec{x}_1^k(t_1 - \delta\tau_{12})] - \vec{e}^l(t_1 - \delta\tau_{12}) \cdot [\vec{\bar{x}}_1(t_1) - \vec{x}_1^l(t_1 - \delta\tau_{12})] \right),$$

with $t_1 = t + \delta\tau_1$ and $t_2 = t + \delta\tau_2$. The navigation signals are typically measured and processed at a frequency of 10 Hz. The time period between two epochs is therefore typically in the range of 0.1 sec.

The time period of the differential clock offset $\delta\tau_{12}(t)$ is in the range 1 msec.

For calculating the satellite positions at the time of the first receiver minus the differentiated offset, an interpolation must therefore be performed.

The $c$-th component of the satellite position $\vec{x}_c^k(t_1 - \delta\tau_{12})$ is determined by a second-order interpolation, i.e.

$$\vec{x}_c^k(t_1 - \delta\tau_{12}) = \sum_{p=0}^{2} \alpha_p \cdot (t_1 - \delta\tau_{12})^p \tag{6}$$

where $c$ refers to the any one of the three spatial direction x, y, and z and wherein the coefficients $\alpha_p$ are determined by a least-squares estimation using the $N$ preceding and $N$ subsequent satellite position estimates, i.e.

$$\min_{\alpha_p} \sum_{n=-N}^{+N} \left( \vec{x}_c^k(t_{1+n}) - \sum_{p=0}^{2} \alpha_p \cdot t_{1+n}^p \right)^2 \tag{7}$$

Similarly, the three components of the unit vector $\vec{e}^k(t_1 - \delta\tau_{12})$ are obtained by interpolation using the unit vectors of the preceding and subsequent epochs.

Subtracting the correction term of equation (5) from the double difference measurements of (1) yields

$$\frac{\lambda}{2\pi} \varphi_{12}^{kl}(t) - c_{12}^{kl}(t) = \left( \vec{e}^k(t_2) - \vec{e}^l(t_2) \right) \cdot \left( \vec{\bar{x}}_2(t_2) - \vec{\bar{x}}_1(t_1) \right) + \lambda N_{12}^{kl} + \varepsilon_{12}^{kl}(t), \tag{8}$$

The synchronization correction is also applied to the double difference pseudorange measurements, i.e.

$$\rho_{12}^{kl}(t) - c_{12}^{kl}(t) = \left( \vec{e}^k(t_2) - \vec{e}^l(t_2) \right) \cdot \left( \vec{\bar{x}}_2(t_2) - \vec{\bar{x}}_1(t_1) \right) + \eta_{12}^{kl}(t), \tag{9}$$

The joint processing of the corrected carrier phase and code measurements of equations (8) and (9) enables the estimation of the real-valued baseline and of the integer-valued double differenced ambiguities.

The synchronization correction according to equation (5) was verified in a zero-baseline test. In the zero-baseline test, the course of 12 double difference carrier phases over 2000 epochs was analyzed with two stationary low-cost single frequency LEA 6T receivers of u-blox. The respective clock offsets of receiver 1 and 2 were already shown in Figure 3.

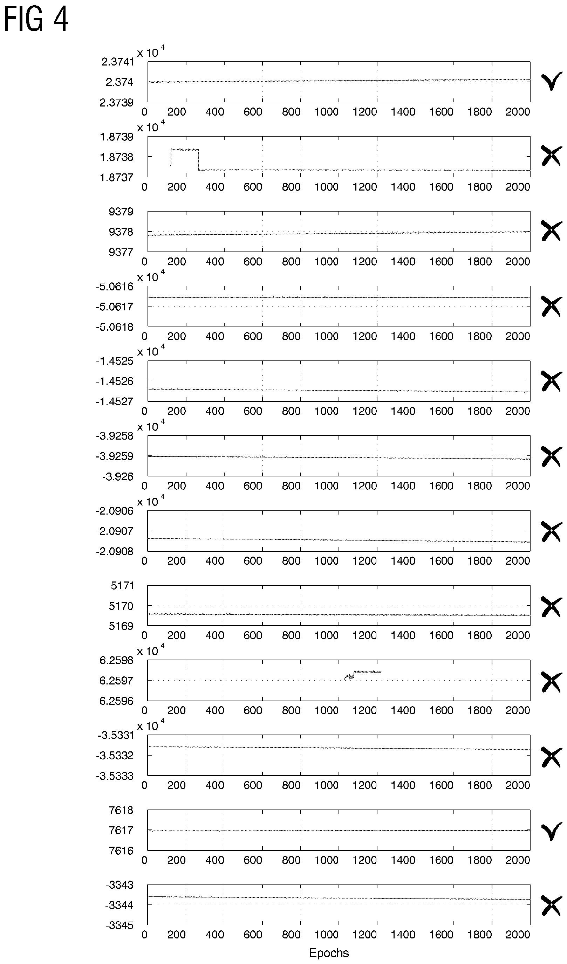

Figure 4 shows the raw double differences before synchronization correction in units of half-cycles. As can be recognized from Figure 4 most double differences are not integer-valued and suffer from a slight drift, which indicates the need for a synchronization correction. There are only a few double differences which are integer-valued and typically refer to the satellites of very high elevation. One can also recognize two half-cycle slips for the second double difference, which might be caused by undetected changes of the navigation bit. These cycle slips need an additional correction.

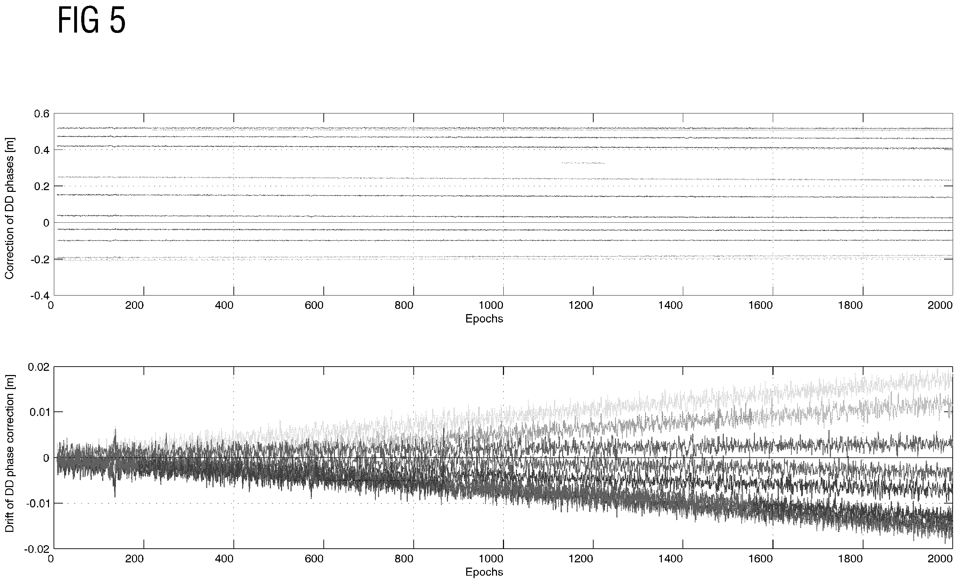

Figure 5 shows the correction term $c_{12}^{kl}(t)$ for the raw measurements of Figure 4 in units of meters. The corrections can be positive or negative and their magnitude can be as large as 50 cm which clearly exceeds one wavelength. The correction term was computed according to (3) based on the interpolated satellite positions and unit vectors pointing from the satellites to the receiver.

It shall be emphasized that the correction term solely depends on the pseudorange measurements of the first receiver 6. This approach enables a very low noise level in the correction as the errors in the estimated receiver and satellite positions are scaled by the small difference in unit vectors from the satellite 2 to the receiver 6, i.e.

$$\left( \vec{e}^k(t_1) - \vec{e}^k(t_1 - \delta\tau_{12}) \right) \cdot \varepsilon_{\vec{x}_2(t_2)} \tag{10a}$$

$$\left( \vec{e}^k(t_1) - \vec{e}^k(t_1 - \delta\tau_{12}) \right) \cdot \varepsilon_{\vec{x}^k(t_2)} \tag{10b}$$

Figure 5 demonstrates that the noise level of the correction tem is in the order of 2 mm and could be easily further reduced by smoothing. Consequently, the restriction to the measurements of the first receiver is much more attractive than using the measurements of the first receiver for calculating the satellite position at time $t_1$ and the measurements of the second receiver for calculating the satellite position at time $t_2$, which would lead to a meter-level combination noise.

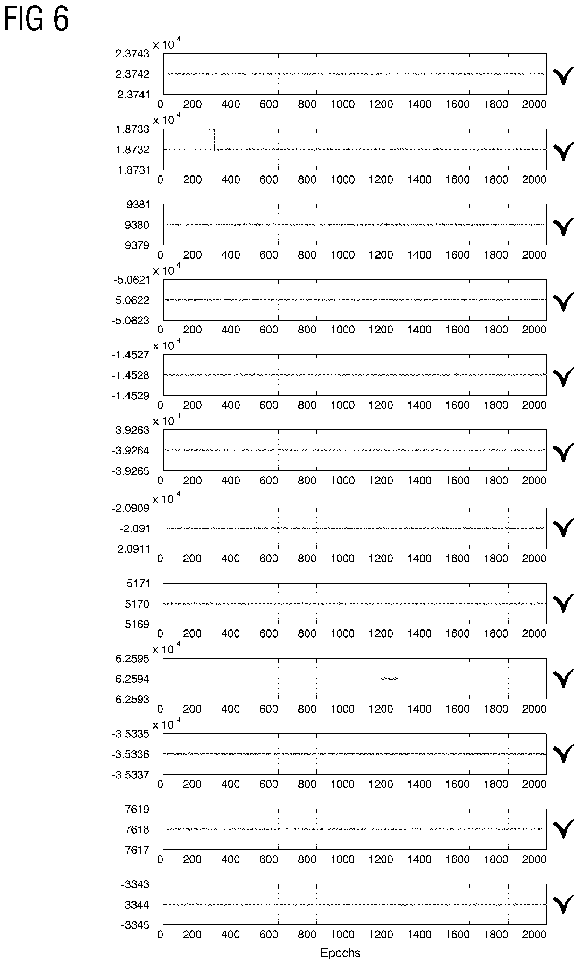

Figure 6 shows the double difference carrier phase measurements after applying the corrections from Figure 5. The diagrams of Figure 5 depict the double difference measurements of 12 satellites in units of half-cycles of a zero-baseline test after application of the synchronization correction. It can be recognized from Figure 5 that all measurements become integer-valued, which indicates the correctness of the correction.

The synchronization correction can also be applied for non-zero baseline applications: In this case, the corrected phase and code measurements are modeled in matrix-vector notation as

$$\begin{bmatrix} \dfrac{\lambda}{2\pi}\varphi_{12}^{12}(t) - c_{12}^{12}(t) \\ \vdots \\ \dfrac{\lambda}{2\pi}\varphi_{12}^{1K}(t) - c_{12}^{1K}(t) \\ \rho_{12}^{12}(t) - c_{12}^{12}(t) \\ \vdots \\ \rho_{12}^{1K}(t) - c_{12}^{1K}(t) \end{bmatrix} = \begin{bmatrix} \vec{e}^{12}(t) \\ \vdots \\ \vec{e}^{1K}(t) \\ \vec{e}^{12}(t) \\ \vdots \\ \vec{e}^{1K}(t) \end{bmatrix} \cdot (\vec{x}_2(t_2) - \vec{x}_1(t_1)) + \begin{bmatrix} \lambda & 0 & 0 \\ 0 & \ddots & 0 \\ 0 & 0 & \lambda \\ 0 & \dots & 0 \\ \vdots & 0 & \vdots \\ 0 & \dots & 0 \end{bmatrix} \cdot \begin{bmatrix} N^{12} \\ \vdots \\ N^{1K} \end{bmatrix} + \begin{bmatrix} \varepsilon_{\varphi_{12}^{12}} \\ \vdots \\ \varepsilon_{\varphi_{12}^{1K}} \\ \varepsilon_{p_{12}^{12}} \\ \vdots \\ \varepsilon_{p_{12}^{12}} \end{bmatrix} \tag{11}$$

The estimation of the baseline and integer ambiguities leads to a weighted integer least-squares problem, i.e.

$$\min_{\substack{\vec{x}_2(t_2) - \vec{x}_1(t_1) \\ N^{12}, \dots, N^{1K}}} \left\| \begin{bmatrix} \dfrac{\lambda}{2\pi}\varphi_{12}^{12}(t) - c_{12}^{12}(t) \\ \vdots \\ \dfrac{\lambda}{2\pi}\varphi_{12}^{1K}(t) - c_{12}^{1K}(t) \\ \rho_{12}^{12}(t) - c_{12}^{12}(t) \\ \vdots \\ \rho_{12}^{1K}(t) - c_{12}^{1K}(t) \end{bmatrix} - \begin{bmatrix} \vec{e}^{12}(t) \\ \vdots \\ \vec{e}^{1K}(t) \\ \vec{e}^{12}(t) \\ \vdots \\ \vec{e}^{1K}(t) \end{bmatrix} \cdot (\vec{x}_2(t_2) - \vec{x}_1(t_1)) - \begin{bmatrix} \lambda & 0 & 0 \\ 0 & \ddots & 0 \\ 0 & 0 & \lambda \\ 0 & \dots & 0 \\ \vdots & 0 & \vdots \\ 0 & \dots & 0 \end{bmatrix} \cdot \begin{bmatrix} N^{12} \\ \vdots \\ N^{1K} \end{bmatrix} \right\|_{\Sigma^{-1}}^2 \tag{12}$$

which can be solved by a numerical search of $N^{12},...,N^{1K}$ and a subsequent analytical calculation of the baseline.

The estimation of the ambiguities can be further improved by adding a state space model describing the inertia of the receiver and/ or by including some deterministic or stochastic a priori information on the baseline.

## 3. Variants

The embodiment of the method described herein can be modified in various ways.

For instance, the interpolation within the epochs can also be performed based on straight lines that are fitted to the known vectors.

The correction term according to equation (5) can also be calculated using a third receiver located in the vicinity of the first or second receiver. Such further embodiment might be necessary if the complete orientation of an object moving in space must be determined.

## 4. Advantages

The proposed method enables a differential integer ambiguity resolution for low cost receivers with clock offsets in the order of milliseconds without the need of any reference clock signal. Thereby, positioning accuracies in the order of millimeters to centimeters become achievable.

Moreover, the proposed method does not need any receiver movement for phase calibration, which enables a high positioning accuracy also for static receivers.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, or groups described in conjunction with a particular aspect, embodiment or example of the invention are to be understood to be applicable to any other aspect, embodiment or example described herein unless incompatible therewith, which fall within the scope of the claimed invention.

## References

[1] P. Teunissen, The least-squares ambiguity decorrelation adjustment: a method for fast GPS ambiguity estimation, J. of Geodesy, vol. 70, pp. 65-82, 1995.

[2] P. Teunissen, Least-Squares Estimation of the Integer GPS Ambiguities, Proc. Gen. Meet. Int. Assoc. of Geodesy, Beijing, China, 1993.

[3] P. Henkel, J. Cardenas and P. Jurkowski, Cascaded Heading Estimation with Phase Coasting, Proc. IEEE of ELMAR, Zadar, Croatia, pp. 283-286, 2012.

[4] R. Buchler, A. J. Brockstein and D. Hsu, Navigation Apparatus with Improved Attitude Determination, US patent, patent number 5,543,804, Aug. 1996.

## Claims

**1.** Method for determining a baseline between two receivers (6) of a satellite navigation system (1), in which:

   - the receivers (6, 7) perform measurements on signals emitted by satellites (2) of the satellite navigation system (1), and
   - an evaluation unit (11) connected to the receivers (6, 7) determines a baseline (8) between the two receivers (6, 7) based on double-differences of the measurements, **characterized in that**
   - the individual clock offsets of the receivers (6, 7) are estimated,
   - an clock offset difference is calculated from the individual clock offsets,
   - a satellite motion correction for the motion of the satellites during the clock offset difference is calculated,
   - the double differences of the measurements are corrected using the satellite motion correction resulting in corrected double differences of the measurements, and
   - the baseline is determined based on the corrected double differences of the measurements.

**2.** The method according to Claim 1,
   wherein the clock offset difference is calculated as the difference of clock offsets of both receivers.

3.  The method according to Claim 1 or 2,
    wherein the receivers (5) perform code and phase measurements.

4.  The method according to claim 3,
    wherein the baseline is determined by resolving the double differences measurements for the baseline and for phase ambiguities of the phase measurements.

5.  The method according to claim 4,
    wherein the baseline and the phase ambiguities are determined by an iterative resolution method with sequential ambiguity fixing and/or a recursive state estimator having the ambiguities, the baseline and the change rate of the baseline as state variables, and/or a length constraint for the baseline.

6.  The method according to any one of Claims 3 to 5,
    wherein the individual clock offsets of the receivers are estimated individually for each receiver by estimating the clock offset of a given receiver together with the absolute position of the given receiver based on undifferenced code measurements of the given receiver.

7.  The method according to any one of Claims 1 to 6,
    wherein the satellite motion correction is determined by calculating the temporal variation of the difference of the measurements on signals from two selected satellites to a selected receiver, as seen from the selected receiver within a time period having the duration of the clock offset difference.

8.  The method according to Claim 7,
    wherein the satellite motion correction is determined by considering the selected receiver as stationary over the duration of the clock offset difference and by calculating the temporal variation of the difference of the length of vectors respectively pointing from the two selected satellites to the selected receiver.

9.  The method according to Claim 8,
    wherein the vectors pointing from the two selected satellites to the selected receiver are determined by an interpolation of the coordinates of the vectors determined in subsequent and preceding epochs.

10. The method according to claim 9,
    wherein the interpolation is performed by fitting a second order polynom to the series of coordinates of the vectors of the preceding and subsequent epochs and by calculating the coordinates of the vector at the required instants of time.

11. The method according to any one of claims 8 to 10,
    wherein the temporal variation of unity vectors, which point from the two selected satellites to the selected receiver and which are used for determining the temporal variation of the difference of the length of vectors respectively pointing from the two selected satellites to the selected receiver, is determined by an interpolation of the coordinates of the unity vectors determined in subsequent and preceding epochs.

12. The method according to claim 11,
    wherein the interpolation is performed by fitting a second order polynom to the series of coordinates of the unity vectors of the preceding and subsequent epochs and by calculating the coordinates of the unity vector at the required instants of time.

13. The method according to any one of Claims 1 to 10,
    wherein the receivers (6) are attached to a movable object (5), and wherein the baseline is used for determining the heading of the movable object (5).

14. A navigation device having two receivers and an evaluation unit for determining the baseline between the two receivers,
    **characterized in that**
    the receivers and the evaluation unit are arranged for performing a method according to any one of claims 1 to 13.

15. A computer program product for a navigation device,
    **characterized in that**

the computer program product contains program code which, when executed by the navigation device of claim 14, performs a method according to any one of claims 1 to 13.

**Patentansprüche**

1.  Verfahren zur Bestimmung einer relativen Position zwischen zwei Empfängern (6) eines Satellitennavigationssystems (1), bei dem:

    - die Empfänger (6, 7) Messungen an Signalen durchführen, die von Satelliten (2) des Satellitennavigationssystems (1) ausgesendet werden, und
    - eine mit den Empfängern (6, 7) verbundene Auswerteeinheit (11) eine relative Position (8) zwischen den beiden Empfängern (6, 7) basierend auf Doppeldifferenzen der Messungen ermittelt,
    **dadurch gekennzeichnet,**
    - **dass** die einzelnen Uhrenfehler der Empfänger (6, 7) geschätzt werden,
    - **dass** aus den einzelnen Uhrenfehlern eine Differenz der Uhrenfehler berechnet wird,
    - **dass** eine Korrektur der Satellitenbewegung berechnet wird für die Bewegung der Satelliten während der zeitlichen Differenz der Uhrenfehler,
    - **dass** die Doppeldifferenzen der Messungen korrigiert werden mit den Korrekturen der Satellitenbewegungen, und
    - **dass** die relative Position zwischen den Empfängern auf der Grundlage der korrigierten Doppeldifferenzen der Messungen bestimmt wird.

2.  Verfahren nach Anspruch 1,
    wobei die Differenz der Uhrenfehler durch Subtraktion der Uhrenfehler der beiden Empfänger berechnet wird.

3.  Verfahren nach Anspruch 1 oder 2,
    wobei die Empfänger (5) Code- und Phasenmessungen durchführen.

4.  Verfahren nach Anspruch 3,

    wobei die relative Position zwischen den Empfängern bestimmt wird,
    indem die Doppeldifferenzen der Messungen aufgelöst werden nach der relativen Position zwischen den Empfängern und nach den Mehrdeutigkeiten der Phasenmessungen.

5.  Verfahren nach Anspruch 4,
    wobei die relative Position zwischen den Empfängern und die Mehrdeutigkeiten der Phasenmessungen durch ein iteratives Verfahren bestimmt werden mit einer sequentiellen Fixierung der Mehrdeutigkeiten und/ oder einem rekursiven Schätzverfahren, das die Mehrdeutigkeiten, die relative Position zwischen den Empfängern und die Änderungsrate der relativen Position zwischen den Empfängern als Zustandsparameter bestimmt, und/ oder eine Längenbeschränkung der relativen Position zwischen den Empfängern verwendet.

6.  Verfahren nach einem der Ansprüche 3 bis 5,
    wobei die einzelnen Uhrenfehler der Empfänger individuell für jeden Empfänger geschätzt werden, indem die Uhrenfehler eines einzelnen Empfängers zusammen mit der absoluten Position des einzelnen Empfängers basierend auf den undifferenzierten Code-Messungen des einzelnen Empfängers geschätzt werden.

7.  Verfahren nach einem der Ansprüche 1 bis 6,
    wobei die Korrektur der Satellitenbewegung bestimmt wird, in dem die Veränderung der Differenz der Messungen an Signalen von zwei ausgewählten Satelliten zu einem ausgewählten Empfänger über eine Zeitdauer berechnet wird, wobei diese Zeitdauer der Differenz der Uhrenfehler der Empfänger entspricht.

8.  Verfahren nach Anspruch 7,
    wobei die Korrektur der Satellitenbewegung bestimmt wird, indem der ausgewählte Empfänger als stationär über die Zeitdauer der Differenz der Uhrenfehler betrachtet wird, und indem die zeitliche Veränderung der Differenz der Längen der Vektoren, die von den beiden ausgewählten Satelliten zu dem ausgewählten Empfänger zeigen, berechnet wird.

**9.** Verfahren nach Anspruch 8,
wobei die Vektoren, die von den zwei ausgewählten Satelliten zu dem ausgewählten Empfänger zeigen, durch eine Interpolation der Koordinaten der Vektoren, die in nachfolgenden und vorausgehenden Epochen bestimmt wurden, bestimmt werden.

**10.** Verfahren nach Anspruch 9,
wobei die Interpolation durchgeführt wird, indem ein Polynom zweiter Ordnung durch die Reihe von Koordinaten der Vektoren der vorausgehenden und nachfolgenden Epochen gelegt wird, und die Koordinaten des Vektors zu den erforderlichen Zeitpunkten berechnet werden.

**11.** Verfahren nach einem der Ansprüche 8 bis 10,
wobei die Veränderung der Einheitsvektoren, die von den ausgewählten Satelliten zu dem ausgewählten Empfänger zeigen und für die Bestimmung der Veränderung der Differenz von zwei dieser Vektoren über die Zeit verwendet werden, über die Zeit bestimmt wird, in dem die Koordinaten der Einheitsvektoren interpoliert werden, und für diese Interpolation die Koordinaten der Einheitsvektoren der vorausgehenden und zukünftigen Zeitpunkte verwendet werden.

**12.** Verfahren nach Anspruch 11,
wobei die Interpolation durchgeführt wird, indem ein Polynom zweiter Ordnung durch die Reihe von Koordinaten der Einheitsvektoren der vorausgehenden und nachfolgenden Zeitpunkte gelegt wird, und in dem die Koordinaten der interpolierten Einheitsvektoren an dem geforderten Zeitpunkt berechnet werden.

**13.** Verfahren nach einem der Ansprüche 1 bis 10,
wobei die Empfänger (6) an einem beweglichen Objekt (5) angebracht sind und wobei die relative Position zwischen diesen Empfängern für die Bestimmung der Ausrichtung des beweglichen Objekts (5) verwendet werden.

**14.** Ein Navigationsgerät mit zwei Empfängern und einer Auswerteeinheit zur Bestimmung der relativen Position zwischen beiden Empfängern,
**dadurch gekennzeichnet,**
**dass** die Empfänger und die Auswerteeinheit zur Durchführung eines Verfahrens nach einem der Ansprüche 1 bis 13 angeordnet sind.

**15.** Ein Computerprogramm-Produkt für ein Navigationsgerät,
**dadurch gekennzeichnet,**
**dass** das Computerprogramm-Produkt Programmcode zur Durchführung eines Verfahrens nach einem der Ansprüche 1 bis 13 enthält.

**Revendications**

**1.** Procédé de détermination d'une position relative entre deux récepteurs (6) d'un système de navigation par satellite (1), dans lequel :

- les récepteurs (6, 7) effectuent des mesures sur les signaux émis par les satellites (2) du système de navigation par satellite (1), et
- une unité d'évaluation (11) connectée aux récepteurs (6, 7) détermine une position relative (8) entre les deux récepteurs (6, 7) sur la base de doubles différences des mesures,
**caractérisé en ce que,**
- les erreurs d'horloge individuelles des récepteurs (6, 7) sont estimées,
- une différence d'erreur d'horloge est calculée sur la base des erreurs d'horloge individuelles,
- une correction du mouvement des satellites est calculée pour le mouvement des satellites pendant la différence d'erreur d'horloge,
- les doubles différences des mesures sont corrigées avec les corrections des mouvements des satellites, et
- la position relative entre les récepteurs est déterminée sur la base de doubles différences des mesures corrigés.

**2.** Procédé selon la revendication 1,
dans lequel la différence des erreurs d'horloge est calculée en soustrayant les erreurs d'horloge des deux récepteurs.

**3.** Procédé selon la revendication 1 ou 2,
dans lequel les récepteurs (5) effectuant des mesures de code et de phase.

**4.** Procédé selon la revendication 3,

dans lequel la position relative entre les récepteurs est déterminée,
en résolvant les doubles différences des mesures pour la position relative entre les récepteurs et pour les ambiguïtés des mesures de phase.

**5.** Procédé selon la revendication 4,
dans lequel la position relative entre les récepteurs et les ambiguïtés des mesures de phase sont déterminées par une méthode itérative avec une fixation séquentielle des ambiguïtés et/ou une méthode d'estimation récursive qui détermine les ambiguïtés, la position relative entre les récepteurs et le taux de changement de la position relative entre les récepteurs en tant que paramètres d'état, et/ou une contrainte de longueur de la position relative entre les récepteurs est utilisé.

**6.** Procédé selon l'une quelconque des revendications 3 à 5,
dans lequel les erreurs d'horloge de récepteur individuelles sont estimées individuellement pour chaque récepteur en estimant l'erreur d'horloge de récepteur individuel conjointement avec la position absolue du récepteur individuel sur la base des mesures de code indifférencié du récepteur individuel.

**7.** Procédé selon l'une quelconque des revendications 1 à 6,
dans lequel la correction de mouvement du satellite est déterminée en calculant la variation de la différence des mesures des signaux de deux satellites sélectionnés vers un récepteur sélectionné sur une période de temps, laquelle période correspond à la différence des erreurs d'horloge des récepteurs.

**8.** Procédé selon la revendication 7,
dans lequel la correction de mouvement du satellite est déterminée en considérant que le récepteur sélectionné est stationnaire sur la période de temps de la différence des erreurs d'horloge et en calculant la variation dans le temps de la différence des longueurs des vecteurs pointant des deux satellites sélectionnés vers le récepteur sélectionné.

**9.** Procédé selon la revendication 8,
dans lequel les vecteurs pointant des deux satellites sélectionnés vers le récepteur sélectionné sont déterminés par une interpolation des coordonnées des vecteurs déterminés aux époques suivantes et précédentes.

**10.** Procédé selon la revendication 9,
dans lequel l'interpolation est déterminé en ajustant un polynôme du deuxième ordre à la série de coordonnées des vecteurs des époques précédente et suivante, et en calculant les coordonnées du vecteur aux instants requis.

**11.** Procédé selon l'une quelconque des revendications 8 à 10,
dans lequel l'évolution dans le temps des vecteurs unitaires pointant des satellites sélectionnés vers le récepteur sélectionné et utilisés pour déterminer l'évolution de la différence de deux de ces vecteurs dans le temps est déterminé par une interpolation qui utilise les coordonnées des vecteurs unitaires des instants précédents et suivants.

**12.** Procédé selon la revendication 11,
dans lequel l'interpolation est déterminé en ajustant un polynôme du deuxième ordre à la série de coordonnées des vecteurs unitaires des époques précédentes et suivantes et en calculant les coordonnées du vecteur unité aux instants requis.

**13.** Procédé selon l'une quelconque des revendications 1 à 10,
dans lequel les récepteurs (6) sont attachés à un objet mobile (5) et
dans lequel la position relative entre ces récepteurs est utilisée pour déterminer l'orientation de l'objet mobile (5).

**14.** Un appareil de navigation avec deux récepteurs et une unité d'évaluation pour déterminer la position relative entre les deux
récepteurs,
**caractérisé en ce que**

le récepteur et l'unité d'évaluation sont agencés pour exécuter un procédé selon l'une des revendications 1 à 13.

15. Produit programme d'ordinateur pour un appareil de navigation,
**caractérisé en ce que**
le produit programme d'ordinateur contient un code de programme pour la mise en oeuvre d'un procédé selon l'une des revendications 1 à 13.

FIG 1

## FIG 2

```
14 ──┐  ┌──────────────────────────────────┐ ◄─┐
      └──│  Measurement of Code and Phase Signal │  │
         └──────────────────────────────────┘  │
                         │                       │
                         ▼                       │
15 ──┐  ┌──────────────────────────────────┐  │
      └──│   Estimation of Clock Offsets and    │  │
         │  Absolute Positions of the Receivers  │  │
         └──────────────────────────────────┘  │
                         │                       │
                         ▼                       │
16 ──┐  ┌──────────────────────────────────┐  │
      └──│        Determination of Vectors       │  │
         │          Pointing to Satellites        │  │
         └──────────────────────────────────┘  │
                         │                       │
                         ▼                       │
                     ◇ 2N? ◇ ────────────────────┘
                         │
        ┌────────────────┴────────────────┐
        ▼                                  ▼
17 ──┐  ┌─────────────┐
      └──│  Interpolation  │
         └─────────────┘
              │
              ▼
18 ──┐  ┌─────────────┐        ┌─────────────┐
      └──│ Calculation of │ ─────► │ Corrected Double │──┐── 19
         │ Correction Terms│        │   Differences    │
         └─────────────┘        └─────────────┘
                                         │
                                         ▼
                              ┌─────────────────┐
                              │ Resolution for Baseline │──┐── 20
                              │ and Phase Ambiguities  │
                              └─────────────────┘
```

## FIG 3

# FIG 4

Epochs

# FIG 5

EP 2 749 900 B1

# FIG 6

Epochs

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5543804 A, R. Buchler, A. J. Brockstein and D. Hsu

### Non-patent literature cited in the description

- **P. TEUNISSEN.** The least-squares ambiguity decorrelation adjustment: a method for fast GPS ambiguity estimation. *J. of Geodesy,* 1995, vol. 70, 65-82
- **P. TEUNISSEN.** Least-Squares Estimation of the Integer GPS Ambiguities. *Proc. Gen. Meet. Int. Assoc. of Geodesy, Beijing, China,* 1993
- **P. HENKEL ; J. CARDENAS ; P. JURKOWSKI.** Cascaded Heading Estimation with Phase Coasting. *Proc. IEEE of ELMAR, Zadar, Croatia,* 2012, 283-286